# EUROPEAN PATENT APPLICATION

(11) **EP 4 195 460 A1**
(43) Date of publication of application: **14.06.2023**
(21) Application number: 21212716.1
(22) Date of filing: 07.12.2021
(51) Int. Cl.: H02K 1/27915

(54) **ROTOR FOR A PERMANENT MAGNET ELECTRICAL MACHINE**

(71) Applicant: Siemens Gamesa Renewable Energy A/S, 7330 Brande (DK)
(72) Inventor: Skougaard, Anders Vorm, 7400 Herning (DK)
(74) Representative: SGRE-Association

(57) **Abstract**

It is described a rotor (1) for a permanent magnet electrical machine, comprising: a rotor house (3) having a rotor house yoke (5), the rotor house yoke (5) comprising for each of plural permanent magnet units (7), a magnet unit contact face (9) and at least one through hole (11, 14); at least one permanent magnet unit (7) having a rotor house contact face (13); a fixing material portion (15) between the magnet unit contact face (9) of the rotor house yoke (5) and the rotor house contact face (13) of the magnet unit (7) for fixing the magnet unit to the rotor house.

## Description

### Field of invention

The present invention relates to a rotor for a permanent magnet electrical machine, further relates to a permanent magnet electrical machine and still further relates to a wind turbine. Furthermore, the present invention relates to a method of manufacturing a rotor for a permanent magnet electrical machine and in particular also to a manufacturing method for a permanent magnet electrical machine.

### Art Background

A permanent magnet electrical machine comprises a rotor having plural permanent magnets mounted and a stator (comprising one or plural segments) having winding sets.

The document EP 1 903 665 A2 discloses a method for mounting a magnet pole forming a permanent magnet at a rotor of an electrical machine. Thereby, a mould is formed by applying a shaping element at a support surface, a permanent magnet is inserted into the mould and adhesive is filled into the mould form.

Conventionally, permanent magnets may be mounted at a rotor using mechanical connection means. It has, however, been observed that the conventionally utilized methods for mounting a permanent magnet at a rotor house are not in all circumstances satisfactory regarding strength or stability on one hand and easy manufacturing or handling on the other hand.

Thus, there may be a need for a rotor for a permanent electrical machine, for a corresponding method for manufacturing the permanent magnet electrical machine or the rotor for the permanent magnet electrical machine. Furthermore, there may be a need for a permanent magnet electrical machine and in particular for a wind turbine comprising the permanent magnet electrical machine.

### Summary of the Invention

This need may be met by the subject matter according to the independent claims. Advantageous embodiments of the present invention are described by the dependent claims.

According to an embodiment of the present invention it is provided a rotor for a permanent magnet electrical machine, comprising: a rotor house having a rotor house yoke (e.g. configured as or comprising or forming a wall), the rotor house yoke comprising for each of plural permanent magnet units, a magnet unit contact face and at least one through hole; at least one permanent magnet unit having a rotor house contact face; a fixing material portion (comprising fixing material) between the magnet unit contact face of the rotor house and the rotor house contact face of the magnet unit for fixing the magnet unit to the rotor house.

The rotor may be an outer rotor or an inner rotor. The permanent magnet electrical machine may in particular be a synchronous permanent magnet electrical machine. The rotor house may be formed by rolling sheet material in several layers such as to achieve a thickness of the rotor house wall between 2 cm and 10 cm, for example. The rotor house may be formed from standard iron or an iron alloy.

The magnet unit contact face provided at the rotor house wall (for example for an outer rotor at an inner rotor house wall) may provide a fixing material contact face at which the fixing material may be distributed. Similarly, the rotor house contact face of the permanent magnet unit may provide a contact face at which the fixing material may be distributed.

When assembled, the rotor house contact face of the permanent magnet unit may face the magnet unit contact face of the rotor house yoke, having the fixing material portion in between. Thus, the fixing material portion may be sandwiched between the magnet unit contact face of the rotor house yoke and the rotor house contact face of the permanent magnet unit. The magnet unit contact face of the rotor house wall may therefore be substantially complementary (in shape) to the rotor house contact face of the permanent magnet unit.

The thickness of the fixing material portion may in particular be substantially constant across the entire lateral area of the rotor house contact face of the permanent magnet unit and also the magnet unit contact face of the rotor house yoke. In particular, the magnet unit contact face of the rotor house wall may have substantially the same area size as the rotor house contact face of the permanent magnet unit. Thereby, a stable connection between the rotor house wall and the permanent magnet unit may be achievable.

The through hole may be provided for allowing the fixing material to be applied between the magnet unit contact face of the rotor house yoke and the rotor house contact face of the permanent magnet unit. For applying the fixing material, the fixing material may be liquid and may have for example a viscosity such that the fixing material can be injected through the through hole to be (distributed) between the rotor house contact face and the magnet unit contact face.

The through hole may have any cross-sectional shape and size which allows the application of the fixing material through the through hole. The through hole extends through the entire thickness of the rotor house yoke. When the rotor is an outer rotor, the fixing material may be (after the magnet unit has been placed at a predetermined position at the rotor house yoke) applied from an outer side of the rotor, may be passed through the through hole and may be distributed between the magnet unit contact face and the rotor house contact face, in particular substantially evenly. Thereby, for example, pressure may be applied. The fixing material portion of the assembled and completed rotor may be solidified or substantially solid or may have some elastic properties.

Additionally, to providing the fixing material portion, the permanent magnet unit may be fixed or mounted to the rotor house contact face employing additional mechanical means, such as one or more bolts, one or more guiding or support or mounting rails, one or more clamps, for example.

The rotor may comprise plural magnet units mounted at the rotor house wall, for example between 1000 and 2000 magnet units. For example, between 5 and 10 magnet units may be mounted in one row, at a particular circumferential position. Plural such magnet unit rows may be arranged at plural different circumferential positions (e.g. equally spaced apart) at the rotor house wall. The plural permanent magnet units or permanent magnet unit rows may provide for example between 150 and 300 magnetic poles which may alternate between a north pole and a south pole, altering for poles adjacent in the circumferential direction.

The rotor may define an axial direction being in a direction of a rotor rotation axis. The circumferential direction (at a considered three-dimensional position) may be along the circumference of the rotor, the radial direction (at a considered three-dimensional position) may be perpendicular to the axial direction and the circumferential direction at the considered three-dimensional position.

The fixing material portion may be understood as a portion of fixing material which is arranged between the rotor house contact face of the permanent magnet unit and the magnet unit contact face of the rotor house yoke. The fixing material portion may not be any portion which comprises a filling portion for example between different permanent magnet units. The fixing material portion comprises fixing material which is in particular cured and/or solidified and/or solid and has adhesive properties such that the rotor house contact face of the permanent magnet unit is fixed to the magnet unit contact face of the rotor house yoke by an adhesive force.

According to an embodiment of the present invention, the through hole enables injection of fixing material from a rotor house yoke side opposite to a side where the magnet unit contact face is located and/or wherein the at least one through hole is axially and circumferentially positioned within the magnet unit contact face, in particular extending radially, in particular in a straight manner and/or wherein the at least one through hole is delimited by an edge of the magnet unit contact face.

The through hole may in particular extend substantially perpendicular to a flat surface provided by the magnet unit contact face of the rotor house yoke. The through hole may comprise substantially constant cross-sectional size and/or shape. The through hole may for example be applied by machining, in particular may be formed as a borehole. For an outer rotor, the fixing material may for example be injected, during manufacturing the rotor, from an outer side of the rotor. In this case, the magnet unit contact face may be arranged at an inner side of the rotor. In contrast, for an inner rotor, the fixing material may be injected from an inner side of the rotor. In this case, the magnet unit contact face of the rotor house may be provided at an outer side of the rotor. For an outer rotor, the outer side of the rotor house or rotor house yoke may be curved. The fixing material may be (after injection) solidified for example by chemical crosslinking.

The magnet unit contact face may extend in the axial direction at least between two axial positions and may extend in the circumferential direction between at least two circumferential positions. The through hole may be circumferentially between the two limiting circumferential positions associated with the magnet unit contact face. Further, the through hole may axially be between the two axial positions delimiting or being associated with the magnet unit contact face.

The through hole may be delimited by material of the rotor house yoke, for example providing a cylindrical through hole wall, in particular running in the radial direction (at the respective position). The magnet unit contact face may for example be perpendicular to a longitudinal direction of the through hole, which might in particular run in the radial direction.

By providing the through hole or more than one through hole per permanent magnet unit, such as two through holes, three through holes, four through holes or even more through holes, it is enabled to apply the fixing material between the entirety or at least a considerable portion such as 70 to 80 to 90% of the area size of the rotor house contact face (in particular being equal to or corresponding to the area size of the magnet unit contact face).

According to an embodiment of the present invention, the at least one through hole has a circular cross-sectional shape, in particular having constant cross-sectional size, in particular constant cross-sectional diameter, wherein the at least one through hole in particular being a threaded through hole.

When the through hole has a circular cross-sectional shape, it may for example be provided by boring or in general by machining. When the through hole is a threaded through hole, it may be enabled to connect for example a hydraulic system or a pressurized piping system, in order to inject the fixing material through the through hole by applying pressure. The threaded through hole may thereby be connected with the pressurized piping system such as to provide a sealed connection prohibiting the fixing material from being expelled from the through hole in an unintended manner (e.g. opposite to the direction of injection).

According to an embodiment of the present invention, an area size of an area extending axially and circumferentially of the fixing material portion is between 0.8 and 1.0 of an area size of an area extending axially and circumferentially of the rotor house contact face of the magnet unit, wherein the fixing material portion is in particular continuous and/or wherein a thickness of the fixing material hole portion is in particular between 0.05 mm and 0.3 mm.

Laterally (as understood in the axial direction and the circumferential direction), the fixing material portion may therefore cover a major portion of the lateral extent of the rotor house contact face of the magnet unit (which may in particular be equal or may correspond to the area size of the magnet unit contact face of the rotor house yoke). Thereby, a stable connection may be achieved. The thickness of the fixing material portion may be adjusted depending on the particular application and the type of fixing material used and/or the material and type of the rotor house yoke and/or the magnet unit outer surface.

According to an embodiment of the present invention, the magnet unit contact face of the rotor house and the rotor house contact face of the magnet unit are substantially flat, the fixing material portion in particular forming a layer between them.

When the magnet unit contact face and the rotor house contact face are substantially flat, the manufacturing may be simplified and also the adhesive strength may be improved. Furthermore, distributing the fixing material between the magnet unit contact face on one hand and the rotor house contact face on the other hand may be simplified. Furthermore, even distribution may be achievable. The layer of fixing material between the rotor house contact face and the magnet unit contact face may in particular have an even or same thickness.

According to an embodiment of the present invention, the rotor house has for each magnet unit two positioning members, in particular integrally formed with the rotor house yoke, positioned at predetermined circumferential positions and/or extending in the axial direction and/or being parallel to each other and/or being arranged circumferentially adjacent to the magnet unit (contact face) and/or contacting at and/or engaging with axially extending edges of the magnet unit at circumferential ends of the magnet unit.

The positioning members may be separate from the rotor house yoke or may be separate portions from the rotor house yoke which may be affixed to the rotor house yoke by further connection means, such as bolts, clamps and so on. In other embodiments, the positioning members are integrally formed with the rotor house wall. In this case, the positioning members may for example be formed by machining the rotor house yoke at defined circumferential positions.

When the positioning members are at predetermined circumferential positions, they may enable to position the magnet units at predetermined circumferential positions and may further support the magnet units such as to maintain their circumferential positions even in operation. Thus, circumferential movement of the magnet unit may be prohibited due to shape fit effected by the positioning members.

When the positioning members extend in the axial direction, it may for example be enabled to insert plural magnet units between the positioning members by sliding the magnet units along the axial direction. Thus, the positioning members may enable guiding the magnet units during manufacturing/assembling of the rotor. Further, the positioning members may hold the inserted magnet units at defined circumferential positions. Thereby, a stable fixation at defined circumferential positions of the magnet units may be provided.

According to an embodiment of the present invention, the positioning members are formed as guiding and/or engagement rails, in particular T-shaped, holding the magnet unit in the circumferential and radial direction at predetermined positions, and/or wherein the through hole is arranged circumferentially between the positioning members, in particular at a circumferentially central position.

The positioning members may have an axial extent which is greater than the axial extent of a single magnet unit. For example, the axial extent of the positioning members may be between five times and ten times an axial extent of a magnet unit. The magnet unit may be in contact with two positioning members at respective circumferential edges. Each one of the positioning members may be in contact with edges of permanent magnet units which are directly adjacent to each other (such that no other magnet unit is between the two considered magnet units). Thus, each of the positioning members may serve to support or hold or fix two magnet units which are adjacent to each other (spaced apart in the circumferential direction) .

When the engagement rails or guiding rails are T-shaped, furthermore, the permanent magnet units may have an edge which may engage under the horizontal portion of the T-rail for engagement and fixation. Furthermore, providing the T-shaped rails may ensure a correct radial positioning of the magnet units and also correct circumferential positioning of the magnet units.

When the through hole is arranged circumferentially at a central position between the positioning members, i.e. the two positioning members between which one of the magnet units is arranged, the fixing material may be applied in an even manner at the respective contact faces (via injection through the through hole).

According to an embodiment of the present invention, a number and/or axial position of the at least one through hole is chosen such that it holds for all of the at least one through hole: an axial distance between the through hole and an axial end of the magnet unit is between 0.8 and 1.2, in particular between 0.9 and 1.1, times a circumferential distance between the through hole and at least one circumferential (in particular axially extending) edge of the magnet unit.

When the positioning of through holes is as defined above, it may be simplified to apply the fixing material substantially across the entire area size of the magnet unit contact face, for providing a stable connection between the magnet unit and the respective rotor house yoke.

In other embodiments, when for example plural through holes are provided which are spaced apart in the circumferential direction, the respective through holes may circumferentially be positioned to be for example substantially evenly distributed between the two positioning members for allowing even distribution of applied fixing material.

According to an embodiment of the present invention, the fixing material comprises at least one of: a glue, a resin, a two-component adhesive, a thermosetting material, a thermoplastic material, an elastomer or elastic material, a two-part methacrylate adhesive, in particular Plexus^{®} MA830, a Silane-modified polymer, in particular Teroson MS 9399, providing an elastic bonding, wherein the fixing material having a viscosity between 35,000 and 120,000 centipoise (cP), before applied to the contact faces, the fixing material being allowed to cure after application.

Thereby, a great flexibility is provided for the choice of the fixing material. The fixing material may have to be liquid before assembling the rotor and for allowing the application of the fixing material through the through hole between the respective magnet unit and the rotor house yoke. The fixing material may be a solidifying material and/or a two-component or two-part fixing material. The resin may for example comprise an epoxy resin. The fixing material may further comprise a crosslinking reagent. Crosslinking may be applied or achieved by applying heat, for example.

According to an embodiment of the present invention, a stator exposed surface of the magnet unit is at least partially curved, in particular at axial ends and/or wherein the permanent magnet unit comprises: a base plate, in particular being flat, in particular comprising carbon steel, in particular S355J2 / SM490 / Q345D steel; a permanent magnet, in particular comprising NdFeB, mounted on the base plate, in particular glued to the base plate; a cover above the magnet, in particular welded at edges to the base plate and/or glued at the magnet, in particular comprising X2CrNiMo17-12-2.

When the stator exposed surface of the magnet unit is at least partially curved, a magnetic focusing may be achieved. The base plate of the permanent magnet unit may substantially be flat having even thickness. In particular, at circumferential edges of the base plate, the circumferential edges may engage below the T-shaped engagement rails provided at the rotor house yoke. The permanent magnet may in particular comprise neodymium, in particular a neodymium iron boron alloy. The cover may be provided for protecting the permanent magnet. The permanent magnet may completely be sealed by the cover mounted thereon and in particular welded at edges to the base plate.

According to an embodiment of the present invention, the rotor house yoke forming a ring spanning a whole circumference, in particular having a diameter between 5 m and 20 m and/or having axial extent between 2 m and 5 m, the ring having a symmetry axis along the axial direction, the circumference extending in the circumferential direction, the radial direction being perpendicular to the axial direction and the circumferential direction. Thereby, conventionally used rotors are supported.

According to an embodiment of the present invention it is provided a permanent magnet electrical machine, comprising: a stator, having coils wound in plural slots, in particular having concentrated winding topology, for providing plural poles and a rotor according to one of the preceding embodiments, wherein the number of poles is in particular equal to the number of slots.

The permanent magnet electrical machine may be a synchronous machine. The stator may comprise a distributed winding topology or a concentrated winding topology. In case of a concentrated winding topology, particular strong and defined fixation of the permanent magnets to the rotor house may be required. Due to the fixing material portion, the fix attachment may be achieved, thereby in particular supporting a concentrated winding topology stator. For the concentrated winding topology it holds that the number of (stator) poles is equal to the number of slots (the slots providing winding space for the windings, wherein the slots alternate with protruding teeth protruding in the radial directions.

According to an embodiment it is provided a wind turbine, comprising a permanent magnet electrical machine operable as a generator according to the preceding embodiment.

It should be understood, that features, individually or in any combination, disclosed, described, applied or explained for a rotor for a permanent magnet electrical machine, may also be applied, individually or in any combination, to a method of manufacturing a rotor for a permanent magnet electrical machine, and vice versa, according to embodiments of the present invention.

According to an embodiment of the present invention it is provided a method of manufacturing a rotor for a permanent magnet electrical machine, the method comprising: providing, in particular machining, at a rotor house yoke of a rotor house, for each of plural permanent magnet units, a magnet unit contact face and at least one through hole; arranging a rotor house contact face of at least one permanent magnet unit at the magnet unit contact face; providing, in particular injecting, (in particular liquid) fixing material through the through hole, to form a fixing material portion between the magnet unit contact face of the rotor house and the rotor house contact face of the magnet unit for fixing the magnet unit to the rotor house.

The magnet unit contact face at the rotor house yoke may for example be provided by machining or milling, for example. The through hole may for example be provided by mechanical boring or laser boring, for example. The rotor house contact face of the permanent magnet unit may be for example inserted between two positioning members which run in the axial direction.

According to an embodiment of the present invention, providing the fixing material through the through hole comprises: applying pressure to the fixing material, to inject the fixing material through the through hole, in order to distribute the fixing material between the rotor house contact face of a magnet unit and the magnet unit contact face of the rotor house, wherein during injecting the fixing material has a viscosity between 35,000 and 120,000 centipoise (cP), the method further comprising: solidifying the fixing material, in particular by applying heat and/or pressure.

At the through hole, particular connection means may be provided (for example a threaded through hole) to connect in a sealed manner, for example a piping system conveying pressurized fixing material.

The through hole may completely or partly be filled with the fixing material forming a fixing material hole filling portion.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates a portion of a rotor for a permanent magnet electrical machine according to an embodiment of the present invention in a perspective view;
Fig. 2 schematically illustrates a cross-sectional view of the portion of the rotor illustrated in Fig. 1;
Fig. 3 schematically illustrates in a perspective view a portion of a rotor house as used for a rotor according to an embodiment of the present invention;
Fig. 4 schematically illustrates a three-dimensionally partially cut-away view of a portion of a rotor according to an embodiment of the present invention;
Fig. 5 schematically illustrates another three-dimensionally partially cut-away view of a portion of a rotor according to an embodiment of the present invention;
Fig. 6 schematically illustrates an partially transparent elevational view of a portion of a rotor according to an embodiment of the present invention; and
Fig. 7 schematically illustrates a cross-sectional view of a magnet unit as employed in a rotor according to an embodiment of the present invention.

### Detailed Description

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.

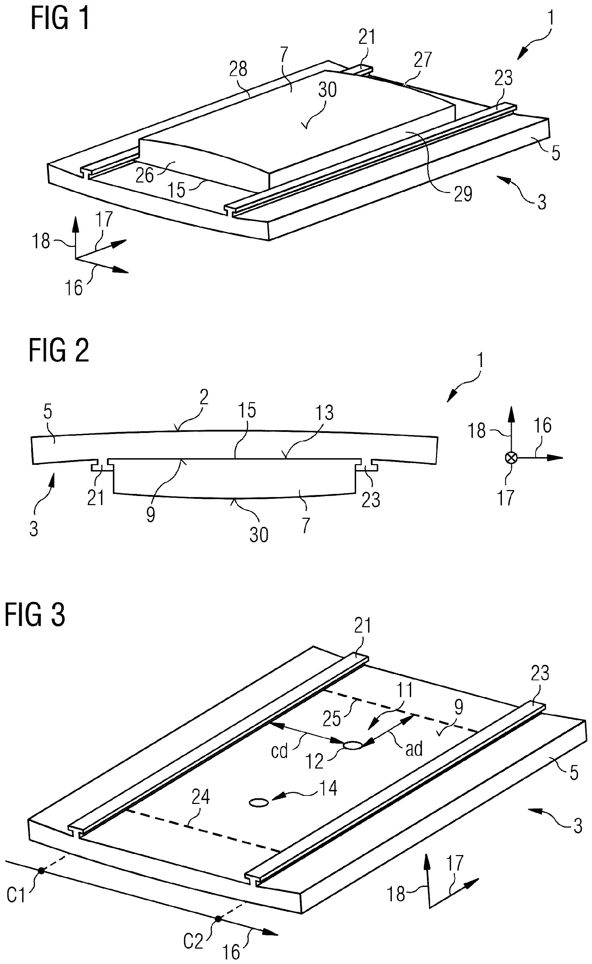

**Fig. 1** schematically illustrates a perspective view of a portion of a rotor 1 for a permanent magnet electrical machine according to an embodiment of the present invention. The rotor 1 comprises a (portion of a) rotor house 3 having a rotor house yoke 5, the rotor house yoke 5 comprising for each of plural magnet units 7 a magnet unit contact face 9 (for example illustrated in Fig. 3) and at least one through hole 11.

The portion of the rotor 1 further comprises one permanent magnet unit 7 having a rotor house contact face 13 (for example illustrated in Fig. 2). The portion of the rotor 1 further comprises a fixing material portion 15 comprising a fixing material, in particular resin, glue or adhesive, between the magnet unit contact face 9 of the rotor house 3 and the rotor house contact face 13 of the magnet unit 7 for fixing the magnet unit 7 to the rotor house 3.

In Fig. 1, reference sign 16 indicates a circumferential direction, reference sign 17 indicates an axial direction and reference sign 18 indicates a radial direction.

**Fig. 2** illustrates a cross-sectional view taken along the axial direction 17 of the portion of the rotor 1. As can be seen in Fig. 2, the magnet unit contact face 9 is arranged opposite to and close to the rotor house contact face 13 of the permanent magnet unit 7, wherein between these two faces, the fixing material portion 15 is arranged thereby fixing the magnet unit 7 to the rotor house yoke 5.

**Fig. 3** illustrates in a perspective view a portion of a rotor house 3 as comprised in the rotor 1 of which a part is illustrated in Fig. 1. The entire rotor 1 may span a whole circumference in the circumferential direction 16 as illustrated in Fig. 1. As can be taken from Fig. 3, the magnet unit contact face 9 of the rotor house 3 is flat. The same holds for the rotor house contact face 13 of the permanent magnet unit 7.

As can be seen in Figs. 1, 2, 3, the rotor house 3 has for each magnet unit 7 two positioning members 21, 23 which are, in the illustrated embodiment, integrally formed with the rotor house yoke 5. Further, the two positioning members 21, 23 are positioned at predetermined circumferential positions c1, c2 and extend in the axial direction 17. Further, the two positioning members 21, 23 are parallel to each other and are arranged circumferentially adjacent to the magnet unit 7.

In particular, the positioning members 21, 23 are formed as engagement rails which are T-shaped and hold the magnet unit 7 in a circumferential direction 17 and in a radial direction 18 at predetermined positions, c1, c2 and a predetermined radial position.

As can be appreciated from Fig. 3, the through hole 11 is arranged circumferentially between the positioning members 21, 23 at a circumferentially central position. As can also be appreciated from Fig. 3, the through hole 11 is axially and circumferentially positioned within the magnet unit contact face 9 and is delimited by an edge 12 of the magnet unit contact face 9. The through hole 11 is a circular cross-sectional shape through hole. The through hole 11 extends to the entire thickness of the rotor house yoke 5.

The through hole 11, 14 enables injection of fixing material from a rotor house yoke side 2 opposite to a side where the magnet unit contact face 9 is located

Depending on the size of the magnet unit 7, in particular lateral size as the size along the axial direction 17 and the circumferential direction 16, more than one through hole may be provided within the magnet unit contact face 9. In the embodiment as illustrated in Fig. 3, for example two through holes 11 and 14 are provided through which fixing material may be injected (in Fig. 3 from below). The dashed lines 24, 25 indicated in Fig. 3 indicate positions of axial edges 26, 27 of the magnet unit 7. The axial distance ad between the through hole 11 and the axial end 25 of the magnet unit 7 is thereby between 0.8 and 1.2 times a circumferential distance cd between the through hole 11 and at least one circumferential edge 28 or 29 of the magnet unit 7. In the illustrated example, also the circumferential distance cd may be defined as the circumferential distance between the through hole 11 and the circumferential position c1, c2 of one of the positioning members 21, 23.

The magnet unit 7 has a stator exposed surface 30 which is at least partially curved, for providing an advantageous focusing effect of the magnetic field.

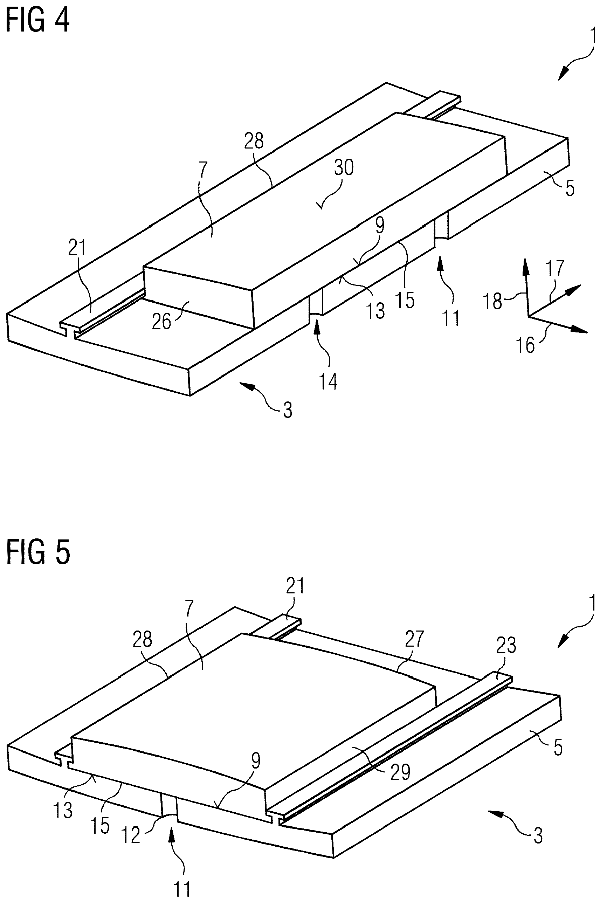

**Fig. 4** illustrates a partially cut-away three-dimensional view of a portion of a rotor 1 according to an embodiment of the present invention. It can be seen, that the through holes 11, 14 have a circular cross-sectional shape and have a constant diameter and shape along the thickness direction of the rotor house yoke 5 of the rotor house 3.

**Fig. 5** illustrates another partially cut-away three-dimensional view of the portion of the rotor 1 as illustrated in Fig. 1.

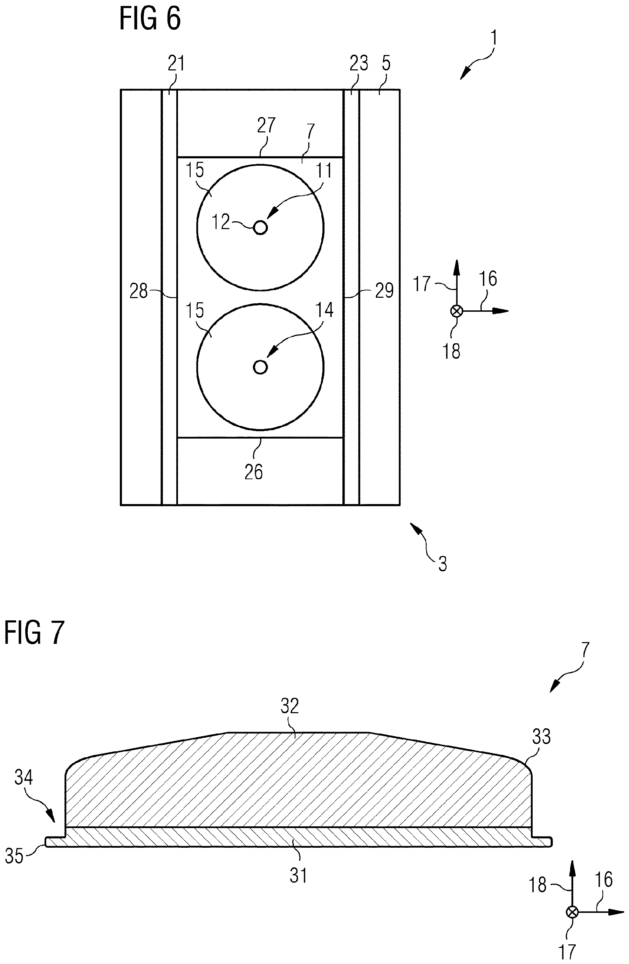

**Fig. 6** schematically illustrates in an elevational view a portion of a rotor 1 according to an embodiment of the present invention. Herein, Fig. 6 is an illustration in a partial transparent manner for illustrating the fixing material portion 15 which is arranged between the rotor house contact face 13 of the permanent magnet unit and the magnet unit contact face 9 of the rotor house yoke. The fixing material portion 15 has been applied between those two faces by injecting fixing material through one or both of the through holes 14, 11 provided in the rotor house yoke 5. As can be seen in Fig. 6, the fixing material portion 15 substantially is provided by two continuously filled circular (ring or disc) structures which therefore provide a continuous fixing material for reliable fixation.

A permanent magnet electrical machine further comprises a stator relative to which the rotor 1 is rotatably supported. Between stator coils and the permanent magnets 7, a gap is provided. Upon rotation of the rotor 1, the permanent magnets induce electric voltages in the windings of the stator. Due to the fixation employing the fixing material portion 15, the permanent magnets are fixedly connected to the rotor house 3 even during operation, i.e. rotation of the rotor 1 relative to the stator at high rotational speed.

The portion of the rotor 1 illustrated in Figs. 1, 2, 4, 5, 6 (or portions thereof) may be manufactured using a method of manufacturing a rotor for the permanent magnet electrical machine according to an embodiment of the present invention. Thereby, a rotor house yoke of a rotor house may be provided and for each of plural permanent magnet units, a magnet unit contact face and at least one through hole may be provided, such as by machining and/or drilling and/or milling and/or boring.

Then, one or more magnet units 7 may be arranged at the respective magnet unit contact faces of the rotor house yoke. Thereby, for example, magnet units 7 may subsequently be inserted between the positioning members 21, 23 and may be moved to the respective intended axial position along the axial direction 17.

Then (i.e. after correct positioning the magnet units of the rotor house yoke), fixing material may be provided in particular by injecting, through the through hole to form the fixing material portion 15 between the magnet unit contact face of the rotor house and the rotor house contact face of the magnet unit for fixing the magnet unit 7 to the rotor house 3.

**Fig. 7** illustrates in a schematic manner a cross-sectional view of a magnet unit 7 as may be employed for a rotor 1 according to an embodiment of the present invention. The magnet unit 7 comprises a base plate 31 which is in particular flat. At the base plate is mounted (e.g. using glue) a permanent magnet 32. The magnet 32 is covered by a cover 33 which may in particular be glued onto the permanent magnet 32. At edges 34, the cover 33 may be welded to the base plate 31. The base plate 31 comprises circumferentially protruding edges 35 or protrusions 35 which engage below the T-shaped guiding or positioning members 21, 23 for providing circumferential as well as radial support or fixation.

The gluing process enabled or provided by the present invention allows to continue to use the cold-marriage technology and to insert the hot magnets after the stator is inserted into the rotor. That means, that the arrangement of the plural magnet units 7 may be formed after the stator has been assembled with the rotor house then being devoid of any permanent magnet units. Once all the magnet units 7 are inserted and the stator/rotor is aligned, the magnets may be injection-glued from outside and thereby the magnet units may be fixed to the rotor house.

The stator may for example be a 12 segment stator comprising 12 physically separate entities which may be mounted together by mounting or fixation means. The stator may comprise a concentrated winding topology.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Rotor (1) for a permanent magnet electrical machine, comprising:
a rotor house (3) having a rotor house yoke (5), the rotor house yoke (5) comprising for each of plural permanent magnet units (7), a magnet unit contact face (9) and at least one through hole (11, 14);
at least one permanent magnet unit (7) having a rotor house contact face (13);
a fixing material portion (15) between the magnet unit contact face (9) of the rotor house yoke (5) and the rotor house contact face (13) of the magnet unit (7) for fixing the magnet unit to the rotor house.

2. Rotor according to the preceding claim,
wherein the through hole (11, 14) enables injection of fixing material from a rotor house yoke side (2) opposite to a side where the magnet unit contact face (9) is located and/or
wherein the at least one through hole (11, 14) is axially and circumferentially positioned within the magnet unit contact face, in particular extending radially, in particular in a straight manner and/or
wherein the at least one through hole (11, 14) is delimited by an edge (12) of the magnet unit contact face (9).

3. Rotor according to one of the preceding claims,
wherein the at least one through hole (11, 14) has a circular cross-sectional shape, in particular having constant cross-sectional size, in particular constant cross-sectional diameter,
wherein the at least one through hole in particular being a threaded through hole.

4. Rotor according to one of the preceding claims,
wherein an area size of an area extending axially and circumferentially of the fixing material portion (15) is between 0.8 and 1.0 of an area size of an area extending axially and circumferentially of the rotor house contact face (13) of the magnet unit (7),
wherein the fixing material portion (15) is in particular continuous and/or
wherein a thickness of the fixing material hole portion (15) is in particular between 0.05 mm and 0.3 mm.

5. Rotor according to one of the preceding claims,
wherein the magnet unit contact face (9) of the rotor house yoke (5) and the rotor house contact face (13) of the magnet unit (7) are substantially flat, the fixing material portion in particular forming a layer between them.

6. Rotor according to one of the preceding claims,
wherein the rotor house (3) has for each magnet unit two positioning members (21, 23), in particular integrally formed with the rotor house yoke, positioned at predetermined circumferential positions (c1,c2) and/or extending in the axial direction (17) and/or being parallel to each other and/or being arranged circumferentially adjacent to the magnet unit (7) and/or contacting at and/or engaging with axially extending edges (28, 29) of the magnet unit (7) at circumferential ends of the magnet unit.

7. Rotor according to the preceding claim,
wherein the positioning members (21, 23) are formed as guiding and/or engagement rails, in particular T-shaped, holding the magnet unit (7) in the circumferential and radial direction at predetermined positions, and/or
wherein the through hole (11, 14) is arranged circumferentially between the positioning members (21, 23), in particular at a circumferentially central position.

8. Rotor according to one of the preceding claims,
wherein a number and/or axial position of the at least one through hole (11, 14) is chosen such that it holds for all of the at least one through hole:
an axial distance (ad) between the through hole (11) and an axial end (25) of the magnet unit (7) is between 0.8 and 1.2, in particular between 0.9 and 1.1, times a circumferential distance (cd) between the through hole (7) and at least one circumferential edge (28) of the magnet unit or the positioning member (21).

9. Rotor according to one of the preceding claims,
wherein the fixing material comprises at least one of:
a glue,
a resin,
a two-component adhesive,
a thermosetting material,
a thermoplastic material,
an elastomer or elastic material,
a two-part methacrylate adhesive, in particular Plexus^{®} MA830,
a Silane-modified polymer, in particular Teroson MS 9399, providing an elastic bonding,
wherein the fixing material having in particular a viscosity between 35,000 and 120,000 cP, before applied to the contact faces, the fixing material being allowed to cure after application.

10. Rotor according to one of the preceding claims,
wherein a stator exposed surface (30) of the magnet unit (7) is at least partially curved, in particular at axial ends and/or
wherein the permanent magnet unit (7) comprises:
a base plate (31), in particular being flat, in particular comprising carbon steel, in particular S355J2 / SM490 / Q345D steel;
a permanent magnet (32), in particular comprising NdFeB, mounted on the base plate, in particular glued to the base plate;
a cover (33) above the magnet, in particular welded at edges to the base plate and/or glued at the magnet, in particular comprising X2CrNiMo17-12-2.

11. Rotor according to one of the preceding claims,
the rotor house yoke (5) forming a ring spanning a whole circumference, in particular having a diameter between 5 m and 15 m and/or having axial extent between 2 m and 5 m,
the ring having a symmetry axis along the axial direction (17), the circumference extending in the circumferential direction (16), the radial direction (18) being perpendicular to the axial direction and the circumferential direction.

12. Permanent magnet electrical machine, comprising:
a stator, having coils wound in plural slots, in particular having concentrated winding topology, for providing plural poles and
a rotor (1) according to one of the preceding claims, wherein the number of poles is in particular equal to the number of slots.

13. Wind turbine, comprising a permanent magnet electrical machine operable as a generator according to the preceding claim.

14. Method of manufacturing a rotor (1) for a permanent magnet electrical machine, the method comprising:
providing, in particular machining, at a rotor house yoke (5) of a rotor house (3), for each of plural permanent magnet units (7), a magnet unit contact face (9) and at least one through hole (11, 14);
arranging a rotor house contact face (13) of at least one permanent magnet unit (7) at the magnet unit contact face (9) ;
providing, in particular injecting, fixing material through the through hole (11, 14), to form a fixing material portion (15) between the magnet unit contact face of the rotor house and the rotor house contact face of the magnet unit for fixing the magnet unit to the rotor house.

15. Method according to the preceding claim,
wherein providing the fixing material through the through hole (11, 14) comprises:
applying pressure to the fixing material, to inject the fixing material through the through hole, in order to distribute the fixing material between the rotor house contact face of a magnet unit and the magnet unit contact face of the rotor house.
wherein during injecting the fixing material has a viscosity between 35,000 and 120,000 cP,
the method further comprising:
solidifying the fixing material, in particular by applying heat and/or pressure.
